# NEUE EUROPÄISCHE PATENTSCHRIFT

(11) **EP 1 384 307 B2**
(45) Veröffentlichungstag und Bekanntmachung des Hinweises auf die Entscheidung über den Einspruch: **08.09.2021**
(45) Hinweis auf die Patenterteilung: 13.03.2019
(21) Anmeldenummer: 02700169.2
(22) Anmeldetag: 25.01.2002
(51) Int. Cl.: H02K 5/22, H02K 11/33, H02K 7/14, H02K 3/50, H02K 3/52

(54) **ELEKTRONISCH KOMMUTIERTER GLEICHSTROMMOTOR**
ELECTRONICALLY COMMUTATED DIRECT CURRENT MOTOR
MOTEUR A COURANT CONTINU A COMMUTATION ELECTRONIQUE

(30) Priorität: 20.04.2001 DE 10119404
(43) Veröffentlichungstag der Anmeldung: 28.01.2004
(73) Patentinhaber: Robert Bosch GmbH, 70442 Stuttgart (DE)
(72) Erfinder: WEIGOLD, Thomas, 76532 Baden-Baden (DE); PFETZER, Johannes, 77815 Buehl (DE); RIEHL, Guenther, 77815 Buehl (DE); SCHMITZ, Matthias, 76534 Buehl (DE); ROCKLAGE-MARLIANI, Gerta, 71272 Renningen (DE); HEIDRICH, Torsten, 71665 Vaihingen/Enz (DE)
(86) Internationale Anmeldenummer: PCT/DE2002/000246
(87) Internationale Veröffentlichungsnummer: WO 2002/087057

(56) Entgegenhaltungen:
- EP-A- 1 022 210
- WO-A1-97/26700
- DE-A- 19 740 938
- US-A- 4 895 536
- US-A- 6 051 899

## Beschreibung

Die Erfindung geht aus von einem elektronisch kommutierten Gleichstrommotor nach dem Oberbegriff des Anspruchs 1.

### Stand der Technik

Bei elektronisch kommutierten Gleichstrommotoren, sog. EC Motoren, auch als bürstenloser Antriebsmotoren bezeichnet, sind die für die elektronische Kommutierung erforderlichen Halbleiterschalter in Form von Leistungstransitoren sowie die Steuerelektronik zum folgerichtigen Ansteuern der Leistungstransitoren im Motor selbst integriert.

Hierzu ist bei einem bekannten, als Außenläufermotor ausgebildeten EC-Motor (DE 41 22 529 A1) der Stator an einem den Rotor außen umgreifenden napfartigen Gehäuse befestigt, an dessen vom Rotor abgekehrten äußeren Boden eine axial abstehende Ringwand angeformt ist, die mit einem auf der Ringwand verrasteten Kunststoffdeckel einen geschlossenen Aufnahmeraum bildet. In dem Aufnahmeraum sind die Leistungstransistoren sowie eine die Steuerelektronik tragende Leiterplatte angeordnet. Über die Leiterbahnen der Leiterplatte ist einerseits die Steuerleitung zu den Steuergittern der Leistungstransistoren hergestellt und andererseits der in einer Aussparung in der Ringwand eingesetzte Anschlussstecker kontaktiert. Die Leistungstransistoren sind in zwei Gruppen zu je drei Leistungstransistoren verteilt und liegen mit ihren Kühlflächen auf Vorsprüngen am Boden des Aufnahmeraums auf.

Die annähernd ringförmige Leiterplatte liegt ebenfalls auf den Vorsprüngen auf und trägt in den Bereichen der beiden Gruppen der Leistungstransistoren Aussparungen. Die Leiterplatte ist an mehreren Stellen mit Hilfe von Befestigungsschrauben gegen die Vorsprünge am Boden vorgespannt. Mit den Befestigungsschrauben zusammen sind an dem Boden zwei Bügel gehalten, welche die jeweils drei zusammengehörigen Leistungstransistoren in einem Zug übergreifen. Zwischen der Innenseite eines jeden Bügels und den Leistungstransistoren ist eine vorgespannte Blattfeder angeordnet, die die Leistungstransistoren fest gegen die Vorsprünge am Boden drücken und auf diese Weise eine besonders gute Wärmeabfuhr von den Leistungstransistoren zum Gehäuse gewährleisten.

Aus den Dokumenten DE 197 40 938 A1, EP 1 022 210 A1, US 4,895,536 A, DE 198 51 060 A1 und US 6,051,899 A sind Elektromotoren bekannt.

### Vorteile der Erfindung

Der erfindungsgemäsße Gleichstrommotor mit den Merkmalen des Anspruchs 1 hat den Vorteil, dass alle Leistungsströme über das Stanzgitter geführt werden und die Leiterplatte mit ihren gegen Auflöten empfindlichen Leiterbahnen nur noch für die schwachen Signal-und Steuerströme, sowie für die Stromversorgung der Steuerelektronik genutzt wird. Das in einem Isolierkörper, der durch eine Kunststoffumspritzung des Stanzgitters hergestellt ist, eingebettete Stanzgitter ist mechanisch so stabil, dass es für weitere Funktionen außer der reinen Leistungsstromführung genutzt wird, so zum Fixieren der Halbleiterschalter und weiterer Leistungsbauteile, wie Elektrolytkondensator und Drosseln, zum Anpressen der Gehäuse der Halbleiterschalter an Kühlflächen und zum Fixieren der von ihm zusammen mit der Leiterplatte gebildeten Montageeinheit im Motorgehäuse.

Durch die in den weiteren Ansprüchen aufgeführten Maßnahmen sind vorteilhafte Weiterbildungen und Verbesserungen des im Anspruch 1 angegebenen Gleichstrommotors möglich.

Gemäß einer vorteilhaften Ausführungsform der Erfindung sind zur Kontaktierung der Wicklungsphasen Schneidklemmen am Stanzgitter so ausgebildet, dass sie beim Einsetzten des Stanzgitters in das Motorgehäuse elektrische Kontaktstellen zu den zugeordneten Wicklungsphasen herstellen und diese in der endgültigen Position des Stanzgitters aufrechterhalten.

Durch diese konstruktive Maßnahme werden vorteilhaft lotfrei Kontaktstellen hergestellt und zusätzliche teure Prozesse, wie beispielsweise Löten oder Schweißen, eingespart. Beim Fügevorgang schälen die Schneidklemmen den Isolierlack des Wicklungsdrahts an den Wicklungsphasenenden ab und stellen eine gute Verbindung zwischen den Wicklungsphasen, dem Stanzgitter und den Halbleiterschaltern her. Auf diese Weise gibt es nur eine einzige Verbindungsstelle zwischen dem Stator und der Kommutierungsvorrichtung des bürstenlosen Elektromotors, die sehr einfach zu fügen ist und keines thermischen Verbindungsprozesses bedarf.

Gemäß der Erfindung ist das Stanzgitter in eine obere und eine davon getrennte untere Gitterlage unterteilt, die in zueinander parallelen Ebenen mit Abstand angeordnet und durch den Isolierkörper zusammengehalten sind. Diese konstruktive Gestaltung ermöglicht eine kompakte Ausführung des Stanzgitters mit kleinen Abmessungen in radialer Richtung.

Gemäß einer vorteilhaften Ausführungsform wird dabei jeder Gitterlage des Stanzgitters ein Steckerstift des Anschlusssteckers zum Anlegen des positiven und negativen Potentials der Netzgleichspannung zugeordnet.

### Zeichnung

Die Erfindung ist anhand eines in der Zeichnung dargestellten Ausführungsbeispiels im Folgenden näher beschrieben. Es zeigen:
- Fig. 1: einen Längsschnitt eines elektronisch kommutierten Gleichstrommotors,
- Fig. 2: ein elektrisches Schaltbild des Gleichstrommotors in Fig. 1,
- Fig. 3: eine perspektivische Ansicht in Richtung Pfeil III in Fig. 1 des Gleichstrommotors bei abgenommenem Gehäusedeckel,
- Fig. 4: eine perspektivische Rückansicht eines in einem Isolierkörper eingebetteten Stanzgitters im Gleichstrommotor gemäß Fig. 1 ohne die elektronische Bauteile einer Kommutierungsvorrichtung,
- Fig. 5: eine Draufsicht der oberen Gitterlage des Stanzgitters in Fig. 4,
- Fig. 6: eine Draufsicht der unteren Gitterlage des Stanzgitters in Fig. 4,
- Fig. 7: eine Draufsicht der in Achsrichtung übereinanderliegenden Gitterlagen des Stanzgitters gemäß Fig. 5 und 6 mit Bestückung mit den elektronischen Bauteilen der Kommutierungsvorrichtung.

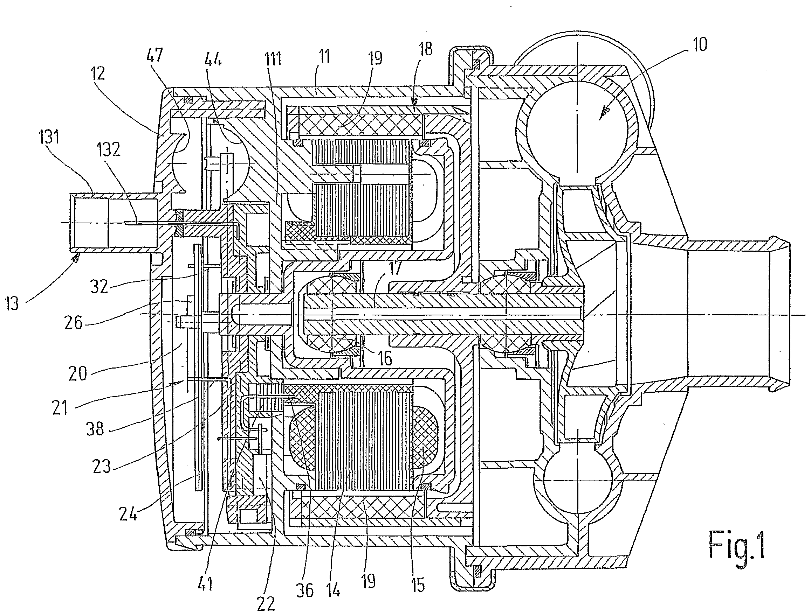

Beschreibung des Ausführungsbeispiels Der in Fig. 1 im Längsschnitt gezeigte elektronisch kommutierte Gleichstrommotor, im folgenden kurz EC-Motor genannt, dient in Kraftfahrzeugen zum Antrieb von Einrichtungen, so z. B. wie hier zum Antrieb einer Kühlwasserpumpe für das Kühlwasser des Fahrzeugmotors. Der als Außsenläufermotor ausgebildete EC-Motor weist ein Motorgehäuse 11 auf, an dessen einer Stirnseite die Kühlwasserpumpe 10 angeflanscht ist und dessen andere Stirnseite von einem abnehmbaren Gehäusedeckel 12 abgedeckt ist. Im Gehäusedeckel 12 ist ein Anschlussstecker 13 zum Anschließen des EC-Motors an das 12V-Gleichspannungsnetzs des Kraftfahrzeugs integriert, dessen Steckergehäuse 131 einstückig mit dem Gehäusedeckel 12 ausgeführt ist und im Ausführungsbeispiel insgesamt vier Steckerstifte 132 umschließt. Im Motorgehäuse 11 ist ein Stator 14 festgelegt, der eine mehrphasige Statorwicklung 15 trägt. Der Stator 14 ist dabei an der vom Gehäusedeckel 12 abgekehrten Seite eines das Motorgehäuse 11 quer durchziehenden Gehäuseboden 111 befestigt und trägt in einem hohlzylindrischen Innenraum ein Lager 16 zu Aufnahme einer Rotorwelle 17, die in die Kühlwasserpumpe 10 hineinragt, dort zusätzlich gelagert ist und das Pumpenrad drehfest aufnimmt. Auf der Rotorwelle 17 ist ein permanentmagneterregter, topfförmiger Rotor 18 drehfest gehalten, der mit seinem Topfmantel den Stator 14 übergreift. An der Innenseite des Topfmantels sind Permanentmagnetsegmente 19 angeordnet.

Auf der vom Stator 14 abgekehrten Seite des Gehäusebodens 111 ist ein Aufnahmeraum 20 ausgebildet, der einerseits von dem Gehäuseboden 111 und andererseits von dem Gehäusedeckel 12 abgeschlossen ist. In dem Aufnahmeraum 20 ist eine Kommutierungsvorrichtung 21 für den EC-Motor aufgenommen, die in bekannter Weise als MOS-FETs ausgebildete Halbleiterschalter 22, eine Steuerelektronik 26 zum Ansteuern der Halbleiterschalter 22, einen Elektrolytkondensator 25 sowie ggf. Entstördrosseln umfasst. Die Kommutierungsvorrichtung 21 ist auf einer Baueinheit, bestehend aus einem in einem Isolierkörper 46 aus Kunststoff eingebetteten Stanzgitter 23 und einer parallel zu dem Stanzgitter 23 und im Abstand davon angeordneten und am eingebetteten Stanzgitter 23 befestigten Leiterplatte 24 mit in Fig. 1 strichliniert angedeuteten Leiterbahnen 241 untergebracht, wobei die Aufteilung der Elektronikbauelemente der Kommutierungsvorrichtung 21 auf Stanzgitter 23 und Leiterplatte 24 so vorgenommen ist, dass die Leistungselektronik dem Stanzgitter 23 und die Steuerelektronik 26 der Leiterplatte 24 zugeordnet ist. Der Isolierkörper 46 ist durch Kunststoffumspritzung des Stanzgitters 23 hergestellt.

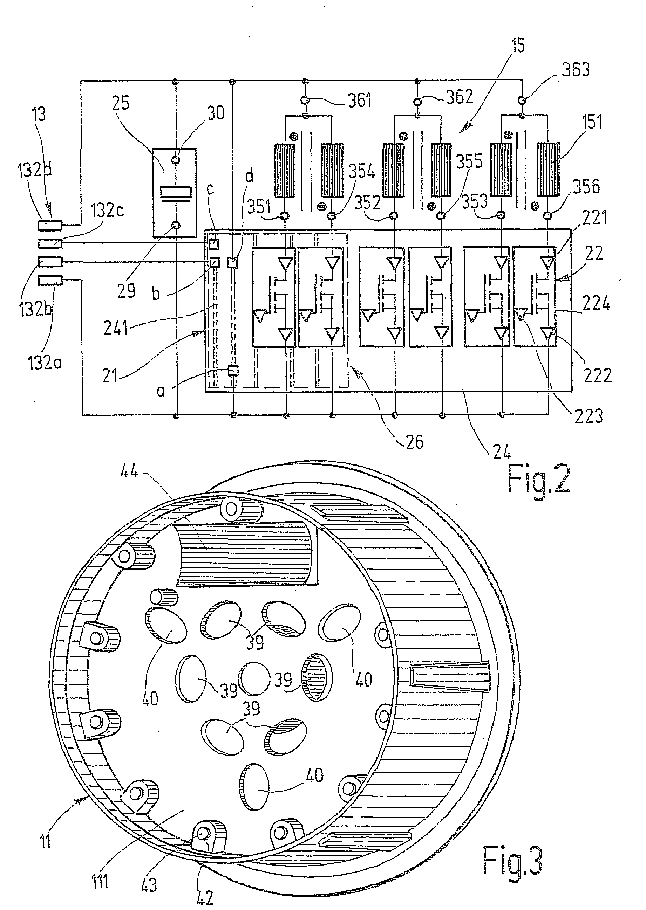

Im Ausführungsbeispiel des EC-Motors mit einer sechsphasigen, dreisträngigen Statorwicklung 15, dessen elektrisches Schaltbild in Fig. 2 dargestellt ist, umfasst die Kommutierungsvorrichtung 21 sechs als Low-side-MOS-FETs ausgebildete Halbleiterschalter 22, von denen jeweils einer in Reihe mit einer Wicklungsphase 151 der Statorwicklung 15 angeordnet ist. Die Halbleiterschalter 22 sind dabei mit ihren Leistungsanschlüssen 221, 222, im Falle der MOS-FETs mit ihren Drains 221 und ihren Sourcen 222, an die Wicklungsenden der Wicklungsphasen 151 bzw. an dem Minus oder Groundpotential des Gleichspannungsnetzes angeschlossen.

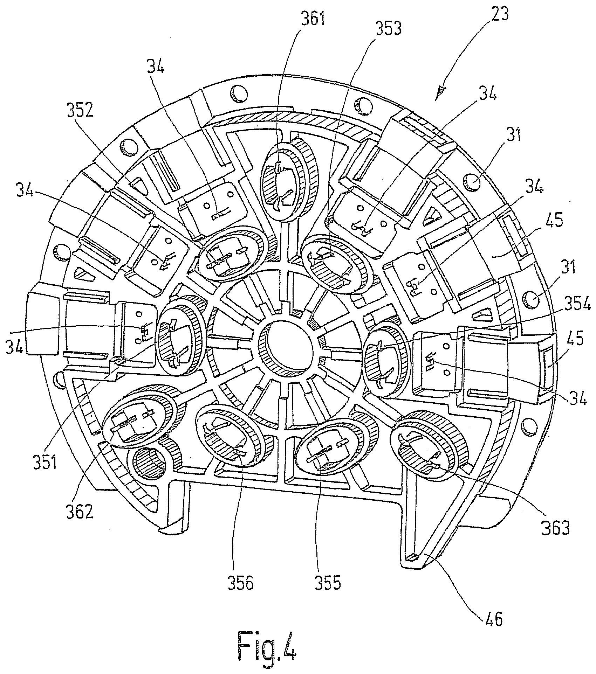

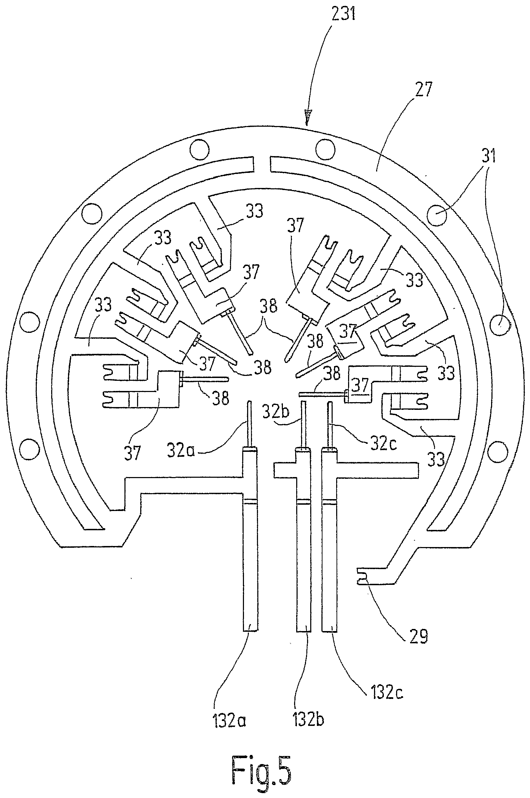

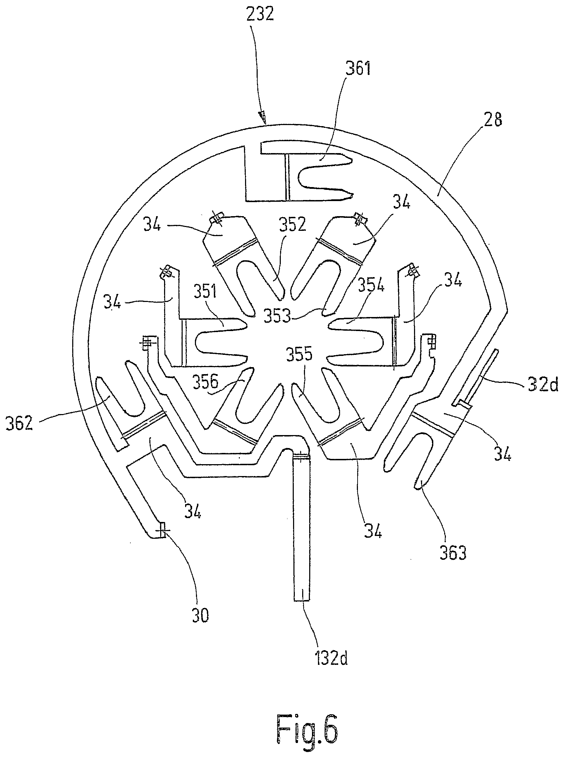

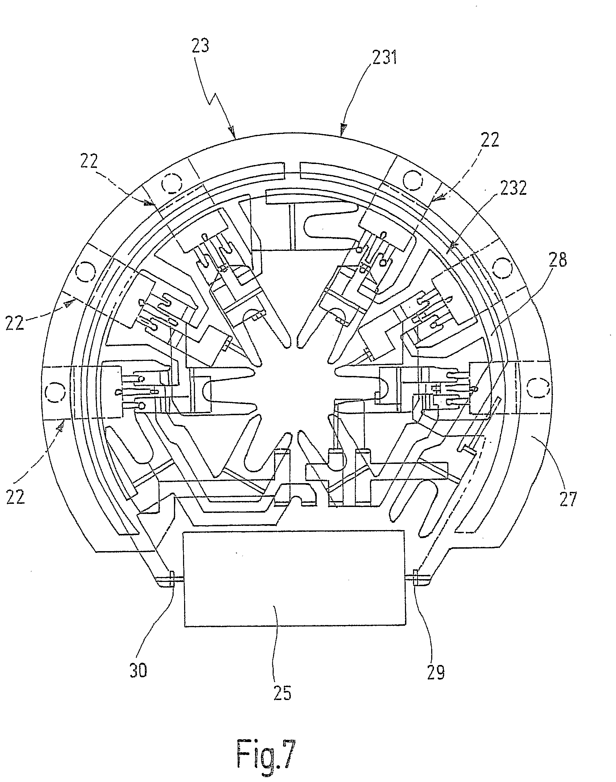

Die Steuerelektroden 223 der Halbleiterschalter 22, in der Ausführung als MOS-FETs die Gates 223, sind an die Steuerelektronik 26 der Kommutierungsvorrichtung 21 angeschlossen, die die Halbleiterschalter 22 folgerichtig so ansteuert, dass die einzelnen Wicklungsphasen 151 sukzessive an das Gleichspannungsnetz angeschlossen werden. Die Steuerelektronik 26, die in Fig. 1 auf der Rückseite der Leiterplatte 24 angeordnet ist, ist hier nur schematisch in Strichlinierung angedeutet. Das kunststoffummantelte Stanzgitter 23 ist in Fig. 4 dargestellt, das Stanzgitter 23 ohne Kunststoffummantelung bzw. ohne Isolierkörper 46 und mit Bestückung mit den Elektronikbauteilen der Kommutierungsvorrichtung 21 ist in Fig. 7 und in Einzelheiten in Fig. 5 und 6 dargestellt.

Zu Erzielung einer kompakten Bauform mit geringen radialen Abmessungen ist das Stanzgitter 23 in eine obere Gitterlage 231 (Fig. 5) und eine untere Gitterlage 232 (Fig. 6) unterteilt, die mit Axialabstand parallel zueinander angeordnet (Fig. 7) und durch den Isolierkörper 46 (Fig. 4) elektrisch voneinander isoliert und zusammengehalten sind.

Jede Gitterlage 231, 232 weist eine außen etwa kreisförmig umlaufende Stanzbahn 27 bzw. 28 auf, an deren einem Ende ein Steckerstift 132a bzw. 132d ausgebildet ist. Jede der äußeren Stanzbahnen 27, 28 ist mit einem Klemmkontakt 29 bzw.

30 versehen. Die Klemmkontakte 29,30 dienen zur Kontaktierung eines Elektrolytkondensators 25 (Fig. 2 und 7).

In der Stanzbahn 27 der oberen Gitterlage 231 sind Durchgangslöcher 31 zum Durchführen von Befestigungselementen voneinander beabstandet angeordnet, mit denen das ummantelte Stanzgitter 23 im Aufnahmeraum 20 des Motorgehäuses 11 befestigt wird. In der oberen Gitterlage 231 sind zwei weitere Steckerstifte 132b und 132c ausgebildet, die parallel zu dem mit der Stanzbahn 27 verbundenen Steckerstift 132a ausgerichtet sind. An dem nach innen weisenden Ende der Steckerstifte 132a, 132b und 132c ist jeweils ein Verbindungsstift 32a bzw. 32b bzw. 32c angeformt, der nach Ausbiegen aus der Ebene der oberen Gitterlage 231 auf der Leiterplatte 24 kontaktiert ist. Die Kontaktstellen auf der Leiterplatte 24 sind in Fig. 2 mit a, b, c gekennzeichnet.

Eine weitere Kontaktstelle d auf der Leiterplatte 24 ist über einen Verbindungsstift 32 d mit der Stanzbahn 28 in der unteren Gitterlage 232 verbunden.

Zur Kontaktierung der Leistungsanschlüsse 221, 222 der Halbleiterschalter 22 sind in jeder der beiden Gitterlagen 231, 232 Anschlussfahnen 33, 34 ausgebildet. Die Anschlussfahnen 33 in der oberen Gitterlage 231 streben dabei radial von der Stanzbahn 27 ab, während die Anschlussfahnen 34 in der unteren Gitterlage 232 an ihrem von der Kontaktstelle mit den Halbleiterschaltern 22 abgekehrten Ende mit Schneidklemmen 351-356 versehen sind. Die Schneidklemmen 351-356 sind dabei um gleiche Umfangswinkel zueinander versetzt radial angeordnet und weisen zum Mittelpunkt der unteren Gitterlage 232. Entsprechend der sechs vorhandenen Halbleiterschalter 22 sind sechs Anschlussfahnen 34 mit jeweils einer Schneidklemme 351-356 vorhanden. Drei weitere Schneidklemmen 361-363 stehen von der Stanzbahn 28 nach innen ab und sind um gleiche Umfangswinkel zueinander versetzt an der Stanzbahn 28 einstückig angebunden. Alle Schneidklemmen 351-356, 361-363 sind so ausgebildet, dass sie aus der Ebene der unteren Gitterlage 232 ausgebogen werden können, wobei die Ausbiegung ca. 90 beträgt.

Zum Anschließen der Steuerelektroden 223 der Halbleiterschalter 22 an die Steuerelektronik 26 sind in der oberen Gitterlage 231 Anschlussstücke 37 ausgebildet, die wie die Anschlussfahnen 33 und 34 eine Kontaktstelle für die Halbleiterschalter 22, hier zum Anbinden der Steuerelektroden 223 der Halbleiterschalter 22, und zusätzlich an dem davon abgekehrten Ende radial. nach innen wegstrebende Verbindungsstifte 38 aufweisen, die nach Ausbiegung aus der Ebene der oberen Gitterlage 231 die Leiterplatte 24 kontaktieren und dort die entsprechenden Anschlusspunkte für die Steuerelektronik 26 herstellen. Die Verbindungsstifte 32 und 38 dienen neben der Herstellung der elektrischen Verbindung zwischen Leiterplatte 24 und Stanzgitter 23 auch noch dem mechanischen Festlegen der Leiterplatte 24 am Stanzgitter 23, was beispielsweise durch einen Steckvorgang bewirkt werden kann.

Die Schneidklemmen 351- 356, 361-363 in der unteren Gitterlage 232 dienen zum lotfreien Kontaktieren der Wicklungsphasen 151 der Statorwicklung 15, wie dies aus dem elektrischen Schaltbild gemäß Fig. 2 hervorgeht. Dabei verbinden die Schneidklemmen 361-363 jeweils das eine Ende eines der drei Wicklungsstränge 151 der Statorwicklung 15 über die Stanzbahn 28 mit dem Steckerstift 132 d, während die Schneidklemmen 351 - 356 die anderen Enden der Wicklungsphasen 151 über die Anschlussfahnen 33 mit dem einen Leistungsanschluss 221 der Halbleiterschalter 22 (Drain der MOS-FETs) verbinden. Die Kontaktierung der Wicklungsphasen 151 erfolgt beim Fügen des ummantelten Stanzgitters 23 in den Aufnahmeraum 20 im Motorgehäuse 11. Hierzu sind im Gehäuseboden 111 kreisförmige Aussparungen 39,40 vorgesehen (vgl. Fig. 1 und 3), die in der Einsetzposition des Stanzgitters 23 im Aufnahmeraum 20 mit den rechtwinklig vom Stanzgitter 23 abstehenden Schneidklemmen 351-356, 361- 263 fluchten. Dabei fluchten die Aussparungen 39 mit den Schneidklemmen 351-356 und die Aussparungen 40 mit den Schneidklemmen 361-363. In oder hinter jeder dieser Aussparungen ist im Statorkörper oder Blechpaket des Stators 14 eine Kontaktierungs-Tasche 41 (Fig. 1) angeordnet, in welchem ein Wicklungsende einer Wicklungsphase 151 so festgelegt ist, dass beim Eintauchen der Schneidklemmen 351-356, 361-363 in die Taschen 41 die Schneidklemmen 351-356, 361-363 den Lack des Wicklungsdrahts abschälen und eine gute Verbindung zwischen dem Wickeldraht und dem Stanzgitter 23 herstellen.

In der perspektivischen Darstellung der Draufsicht des Motorgehäuses 11 bei abgenommenem Gehäusedeckel 12 und noch nicht eingesetztem Stanzgitter 23 mit Leiterplatte 24 sind gemäß Figur 3 am Umfang verteilt angeordnete Auflagenocken 42, auf die das kunststoffummantelte Stanzgitter 23 gemäss Fig. 4 mit seiner dort zu sehenden Frontseite aufgelegt wird, zu erkennen. An diesen Auflagenocken 42 sind Stemmstifte 43 vorgesehen, die durch die Durchgangslöcher 31 im Stanzgitter 23 hindurchtreten. Durch Verstemmen dieser Stemmstifte 43 wird das Stanzgitter 23 mit daran befestigter Leiterplatte 24 im Aufnahmeraum 20 gehalten.

Der Gehäuseboden 111 im Aufnahmeraum 20 ist als Kühlfläche ausgebildet und übernimmt die Wärmeableitung von den Halbleiterschaltern 22. Weiterhin ist in dem Gehäuseboden 111 eine Einwölbung 44 (Fig. 1 und 3) ausgeformt, die zum kraftschlusslosen Einlegen des Elektrolytkondensators 25 (Fig. 2 und 7) dient. Zur verbesserten Wärmeabfuhr vom Elektrolytkondensator 25 ist die Einwölbung mit einer Wärmeleitpaste bestrichen.

Das wie vorstehend beschrieben aufgebaute und in dem Isolierkörper 46 eingebettete Stanzgitter 23 (Fig. 4) dient auch zur Halterung der Halbleiterschalter 22. Hierzu sind in dem Isolierkörper 46 Taschen 45 eingeformt, in welche die Halbleiterschalter 22 mit ihrem. Gehäuse 224 formschlüssig eingesteckt werden. Die Taschen 45 sind dabei jeweils zwischen den Durchgangslöchern 31 angeordnet und mit geringer radialer Tiefe ausgeführt, so dass ein großer Teil der Fläche der Gehäuse 224 freiliegt. Beim Einsetzen des Stanzgitters 23 in den Aufnahmeraum 20 und nach Befestigen des Stanzgitters 23 im Aufnahmeraum 20, drückt das Stanzgitter 23 diese freiliegenden Gehäuseflächen der Halbleiterschalter 22 kraftschlüssig an die Kühlfläche des Gehäusebodens 111 an.

Dabei kann zwischen den Gehäusen 224 und der Kühlfläche noch eine elektrisch isolierende Wärmeleitfolie eingelegt werden.

In Fig. 7, die eine Draufsicht auf das noch nicht ummantelte Stanzgitter 23 mit seinen beiden Gitterlagen 231 und 232 zeigt, ist die Anordnung der Halbleiterschalter 22 mit Gehäuse 224, Leistungsanschlüssen 221 und 222 und Steueranschlüssen 223 dargestellt. Die Schneidklemmen 351-356 und 361-363 sind dabei noch nicht aus der Ebene der beiden Gitterlagen 231, 232 ausgebogen. Aus den Ebenen der beiden Gitterlagen 231, 232 sind aber bereits die Steckerstifte 132 ausgebogen, und zwar zur Biegerichtung der Schneidklemmen 351-356, 361-363 entgegengerichtet um ca. 90 . Ist das Stanzgitter 23 im Aufnahmeraum 20 festgelegt und wird der Gehäusedeckel 12 auf das Motorgehäuse 11 aufgesetzt, so tauchen die zueinander parallelen Steckerstifte 132 in das am Gehäusedeckel 12 axial abstehende Steckergehäuse 131 ein und der Anschlussstecker 13 für den EC-Motor ist komplettiert. An den Steckerstift 132a wird dabei das Minuspotential und an den Steckerstift 132d das Pluspotential des Gleichspannungsnetzes angeschlossen.

Mit dem Steckerstift 132b wird die Signalleitung für die Steuerelektronik 26 verbunden und der Steckerstift 132c ist als Reserve vorgesehen. Auf der dem Aufnahmeraum 20 zugekehrten Innenseite des Gehäusedeckels 12 ist noch eine konkave Einbuchtung 47 vorgesehen, die der Einwölbung 44 gegenüberliegt und ebenfalls den Zylindermantel des Elektrolytkondensators 25 teilweise umgreift, so dass der Elektrolytkondensator 25 bei am Motorgehäuse 11 festgelegtem Gehäusedeckel 12 zwischen Einwölbung 44 und Einbuchtung 47 ohne Presskraft gehalten ist.

Wie aus dem beschriebenen Aufbau des in dem Isolierkörper 46 eingebetteten Stanzgitters 23 mit daran angesteckter Leiterplatte 24 hervorgeht, werden alle Leistungsströme der Elektronikbauelemente der Kommutierungsvorrichtung 21 über das Stanzgitter 23 geführt, während lediglich die schwachen Steuersignale in den Leiterbahnen 241 der Leiterplatte 24 geführt werden. Zusätzlich übernimmt das Stanzgitter 23 noch die Halterung und Positionierung der Halbleiterschalter 22 sowie das kraftschlüssige Andrücken der Halbleiterschalter 22 an die Kühlfläche, wodurch eine gute Wärmeableitung der in den Halbleiterschaltern 22 entstehenden Wärme sichergestellt ist.

Die Kontaktierung der Statorwicklung 15 erfolgt selbsttätig beim Montagevorgang, d. h. beim Einsetzen des Stanzgitters 23 in seine vorgesehene Position im Aufnahmeraum 20 des Motorgehäuses 11. Ein thermischer Verbindungsprozess zur Herstellung des elektrischen Kontakts zwischen Stanzgitter 23 und Statorwicklung 15 ist nicht erforderlich.

Die Erfindung ist nicht auf das vorstehend beschriebene Ausführungsbeispiel beschränkt. So kann die Statorwicklung 15 mit einer beliebigen Phasenzahl ausgeführt werden, z. B. drei oder vierphasig. Die Anzahl der Halbleiterschalter 22 ist dann entsprechend anzupassen. Bei einer dreiphasigen Statorwicklung 15 mit nicht belegtem Sternpunkt sind ebenfalls sechs Halbleiterschalter 22 vorzusehen, die in einer dreiphasigen Brückenschaltung zwischen den Stanzbahnen 27 und 28 der oberen und unteren Gitterlage 231, 232 des Stanzgitters 23 angeschlossen werden. Die Drains 221 von drei der als MOS-FETs ausgeführten Halbleiterschalter 22 und die Sourcen 222 der anderen Halbleiterschalter 22 werden dann über jeweils drei Schneidklemmen mit den Wicklungsanfängen der drei Wicklungsphasen 151 kontaktiert.

In dem beschriebenen Ausführungsbeispiel ist das Stanzgitter 23 aus Platzgründen zweilagig mit einer oberen und unteren Gitterlage 231, 232 ausgeführt. Das Stanzgitter 23 kann aber auch einlagig ausgebildet werden.

## Patentansprüche

1. Elektronisch kommutierter Gleichstrommotor mit einem Stator (14), der eine mehrere Wicklungsphasen (151) aufweisende Statorwicklung (15) trägt, mit mehreren, jeweils ein Gehäuse (224) mit zwei Leistungsanschlüssen (221, 222) und einem Steueranschluss (223) aufweisenden Halbleiterschaltern (22) zum Anschließen der Wicklungsphasen (151) an eine Netzgleichspannung, mit einer Steuerelektronik (26) zum folgerichtigen Ansteuern der Halbleiterschalter (22), mit einem den Stator (14) tragenden Motorgehäuse (11), das die Halbleiterschalter (22) sowie eine die Steuerelektronik (26) tragende Leiterplatte (24) mit Leiterbahnen (241) aufnimmt, die über ihre Leiterbahnen (241) die Steuerelektronik (26) mit den Halbleiterschaltern (22) verbindet, und mit einem Steckerstifte (132) aufweisenden Anschlussstecker (13) zum Zuführen der Netzgleichspannung, wobei die Steckerstifte (132) des Anschlusssteckers (13), die Wicklungsphasen (151) der Statorwicklung (15), die Leistungsanschlüsse (221, 222) der Halbleiterschalter (22) sowie Anschlüsse (29, 30) weiterer Leistungsbauteile auf einem Stanzgitter (23) kontaktiert sind, mit dem eine elektrische Verbindung zur Leiterplatte (24) hergestellt ist, und **dadurch gekennzeichnet, dass** die Leiterplatte (24) mit dem in einem Isolierkörper (46) eingebetteten Stanzgitter (23) mechanisch verbunden ist, wobei die Halbleiterschalter (22) am Stanzgitter (23) gehalten sind, wobei das Stanzgitter (23) eine obere und eine davon getrennte untere Gitterlage (231, 232) aufweist, die in zueinander parallelen Ebenen mit Abstand angeordnet und durch den Isolierkörper (46) zusammengehalten sind.

2. Gleichstrommotor nach Anspruch 1, **dadurch gekennzeichnet, dass** jede Gitterlage (231, 232) eine etwa kreisförmig umlaufende Stanzbahn (27, 28) aufweist und dass die Durchgangslöcher (26) zum Durchstecken der Befestigungselemente von einander beabstandet in mindestens einer der Stanzbahnen (27) angeordnet sind.

3. Gleichstrommotor nach Anspruch 1 oder 2, **dadurch gekennzeichnet, dass** an jeder Gitterlage (231, 232) einer von zwei dem Anschluss an die Netzgleichspannung dienenden Steckerstifte (132a, 132d) ausgebildet ist.

4. Gleichstrommotor nach einem der Ansprüche 1-3, **dadurch gekennzeichnet, dass** an jeder Gitterlage (231, 232) ein Klemmkontakt (29,30) des Paars von Klemmkontakten (29,30) für den Elektrolytkondensator (25) ausgebildet ist.

5. Gleichstrommotor nach einem der Ansprüche 1-4, **dadurch gekennzeichnet, dass** in der oberen Gitterlage (231) mindestens ein weiterer Steckerstift (132b) des Anschlusssteckers (13) zum Anschließen einer Signalleitung für die Steuerelektronik (26) ausgebildet und aus der Ebene des Stanzgitters (23) ausgebogen ist.

6. Gleichstrommotor nach einem der Ansprüche 1-5, **dadurch gekennzeichnet, dass** die Anschlussfahnen (33, 34) zur Kontaktierung der Leistungsanschlüsse (221, 222) der Halbleiterschalter (20) auf die obere und untere Gitterlage (231, 232) verteilt sind, dass die der oberen Gitterlage (231) zugeordneten Anschlussfahnen (33) von der Stanzbahn (27) nach innen wegstreben und dass in der oberen Gitterlage (231) Anschlussstücke (37) für die Steuergitter (223) der Halbleiterschalter (22) vorgesehen sind.

7. Gleichstrommotor nach Anspruch 6, **dadurch gekennzeichnet, dass** an den Anschlussstücken (37) Verbindungsstifte (38) zur Kontaktierung der Leiterplatte (24) ausgebildet sind, die aus der Ebene der oberen Gitterlage (281) des Stanzgitters (23) ausgebogen sind.

8. Gleichstrommotor nach Anspruch 7, **dadurch gekennzeichnet, dass** die Leiterplatte (24) parallel zum Stanzgitter (23) von diesem beabstandet angeordnet ist und über die um ca. 90° ausgebogenen Verbindungsstifte (38) am Stanzgitter (23) abgestützt ist.

9. Gleichstrommotor nach einem der Ansprüche 6-8, **dadurch gekennzeichnet, dass** die Schneidklemmen (351-356, 361-363) in der unteren Gitterlage (232) des Stanzgitters (23) ausgebildet sind und dass die einen Schneidklemmen (351-356) mit den der unteren Gitterlage (232) zugeordneten Anschlussfahnen (34) und die anderen Schneidklemmen (36) mit der umlaufenden Stanzbahn (28) einstückig verbunden sind.

## Claims

1. Electronically commutated DC motor comprising a stator (14) which is fitted with a stator winding (15) having a plurality of winding phases (151), comprising a plurality of semiconductor switches (22), which each have a housing (224) with two power connections (221, 222) and one control connection (223), for connecting the winding phases (151) to a DC system voltage, comprising control electronics (26) for sequentially actuating the semiconductor switches (22), comprising a motor housing (11) which is fitted with the stator (14) and accommodates the semiconductor switches (22) and a printed circuit board (24) which is fitted with the control electronics (26) and has conductor tracks (241) and, by means of its conductor tracks (241), connects the control electronics (26) to the semiconductor switches (22), and comprising a connection plug (13), which has plug pins (132), for supplying the DC system voltage, wherein contact is made with the plug pins (132) of the connection plug (13), the winding phases (151) of the stator winding (15), the power connections (221, 222) of the semiconductor switches (22) and also connections (29, 30) of further power components on a leadframe (23) by way of which an electrical connection to the printed circuit board (24) is established, and **characterized in that** the printed circuit board (24) is mechanically connected to the leadframe (23) which is embedded in an insulating body (46), wherein the semiconductor switches (22) are held on the leadframe (23), wherein the leadframe (23) has an upper and a separate lower leadframe layer (231, 232), which leadframe layers are arranged at a distance in planes which are parallel in relation to one another and which leadframe layers are held together by the insulating body (46).

2. DC motor according to Claim 1, **characterized in that** each leadframe layer (231, 232) has an approximately circularly peripheral stamped web (27, 28), and **in that** the passage holes (26) for the fastening elements to pass through are arranged at a distance from one another in at least one of the stamped webs (27).

3. DC motor according to Claim 1 or 2, **characterized in that** one of two plug pins (132a, 132d) which serve for connection to the DC system voltage is formed on each leadframe layer (231, 232).

4. DC motor according to one of Claims 1-3, **characterized in that** one clamping contact (29, 30) of the pair of clamping contacts (29, 30) for the electrolytic capacitor (25) is formed on each leadframe layer (231, 232).

5. DC motor according to one of Claims 1-4, **characterized in that** at least one further plug pin (132b) of the connection plug (13) for connecting a signal line for the control electronics (26) is formed in the upper leadframe layer (231) and bent out of the plane of the leadframe (23).

6. DC motor according to one of Claims 1-5, **characterized in that** the connection lugs (33, 34) for making contact with the power connections (221, 222) of the semiconductor switches (20) are distributed over the upper and lower leadframe layers (231, 232), **in that** the connection lugs (33) which are associated with the upper leadframe layer (231) extend away inwards from the stamped web (27), and **in that** connection pieces (37) for the control grids (223) of the semiconductor switches (22) are provided in the upper leadframe layer (231).

7. DC motor according to Claim 6, **characterized in that** connecting pins (38) for making contact with the printed circuit board (24) are formed on the connection pieces (37), which connecting pins are bent out of the plane of the upper leadframe layer (281) of the leadframe (23).

8. DC motor according to Claim 7, **characterized in that** the printed circuit board (24) is arranged parallel in relation to the leadframe (23) at a distance therefrom and is supported on the leadframe (23) by means of the connecting pins (38) which are bent out through approximately 90°.

9. DC motor according to one of Claims 6-8, **characterized in that** the insulation-displacement terminals (351-356, 361-363) are formed in the lower leadframe layer (232) of the leadframe (23), and **in that** the one set of insulation-displacement terminals (351-356) are connected in one piece to the connection lugs (34) which are associated with the lower leadframe layer (232) and the other insulation-displacement terminals (36) are connected in one piece to the peripheral stamped web (28).

## Revendications

1. Moteur à courant continu à commutation électronique, comprenant un stator (14) qui supporte un enroulement de stator (15) possédant plusieurs phases d'enroulement (151), comprenant plusieurs commutateurs à semiconducteur (22), possédant respectivement un boîtier (224) ayant deux bornes de puissance (221, 222) et une borne de commande (223), destinées à raccorder les phases d'enroulement (151) à une tension continue de réseau, comprenant une électronique de commande (26) destinée à attaquer logiquement les commutateurs à semiconducteur (22), comprenant un carter de moteur (11) qui supporte le stator (14), lequel accueille les commutateurs à semiconducteur (22) ainsi qu'un circuit imprimé (24) muni de pistes conductrices (241) qui supporte l'électronique de commande (26) et qui relie, par le biais de ses pistes conductrices (241), l'électronique de commande (26) aux commutateurs à semiconducteur (22), et comprenant une fiche de raccordement (13) possédant des broches d'enfichage (132) servant à l'acheminement de la tension continue de réseau, les broches d'enfichage (132) de la fiche de raccordement (13), les phases d'enroulement (151) de l'enroulement de stator (15), les bornes de puissance (221, 222) des commutateurs à semiconducteur (22) ainsi que les bornes (29, 30) de composants de puissance supplémentaires étant mises en contact sur une grille estampée (23) avec laquelle est établie une liaison électrique avec le circuit imprimé (24), et **caractérisé en ce que** le circuit imprimé (24) est relié mécaniquement avec la grille estampée (23) enrobée dans un corps isolant (46), les commutateurs à semiconducteur (22) étant maintenus à la grille estampée (23), la grille estampée (23) possède une couche de grille supérieure et une inférieure séparée de celle-ci (231, 232), lesquelles sont disposées avec un écart dans des plans mutuellement parallèles et sont maintenues ensemble par le corps isolant (46).

2. Moteur à courant continu selon la revendication 1, **caractérisé en ce que** chaque couche de grille (231, 232) possède une bande d'estampage (27, 28) circonférentielle approximativement circulaire et **en ce que** les trous traversants (26) servant à l'insertion des éléments de fixation sont disposés espacés les uns des autres dans au moins l'une des bandes d'estampage (27).

3. Moteur à courant continu selon la revendication 1 ou 2, **caractérisé en ce qu'**une parmi deux broches d'enfichage (132a, 132d) servant au raccordement à la tension continue de réseau est formée au niveau de chaque couche de grille (231, 232).

4. Moteur à courant continu selon l'une des revendications 1 à 3, **caractérisé en ce qu'**un contact à serrage (29, 30) de la paire de contacts à serrage (29, 30) pour le condensateur électrolytique (25) est formé au niveau de chaque couche de grille (231, 232).

5. Moteur à courant continu selon l'une des revendications 1 à 4, **caractérisé en ce que** dans la couche de grille supérieure (231) est formée au moins une broche d'enfichage (132b) supplémentaire de la fiche de raccordement (13) servant au raccordement d'une ligne de signal pour l'électronique de commande (26) et repliée hors du plan de la grille estampée (23).

6. Moteur à courant continu selon l'une des revendications 1 à 5, **caractérisé en ce que** les languettes de raccordement (33, 34) destinées à la mise en contact des bornes de puissance (221, 222) des commutateurs à semiconducteur (20) sont distribuées sur les couches de grille supérieure et inférieure (231, 232), **en ce que** les languettes de raccordement (33) associées à la couche de grille supérieure (261) tendent vers l'intérieur en s'écartant de la bande d'estampage (27) et **en ce que** des pièces de raccordement (37) pour la gâchette de commande (223) des commutateurs à semiconducteur (22) se trouvent dans la couche de grille supérieure (231).

7. Moteur à courant continu selon la revendication 6, **caractérisé en ce que** des broches de liaison (38) destinées à entrer en contact avec le circuit imprimé (24) sont formées au niveau des pièces de raccordement (37), lesquelles sont recourbées hors du plan de la couche de grille supérieure (281) de la grille estampée (23).

8. Moteur à courant continu selon la revendication 7, **caractérisé en ce que** le circuit imprimé (24) est disposée parallèlement à la grille estampée (23) et espacée de celle-ci et s'appuie sur la grille estampée (23) par le biais des broches de liaison (38) recourbées d'environ 90°.

9. Moteur à courant continu selon l'une des revendications 6 à 8, **caractérisé en ce que** les bornes guillotines (351-356, 361-363) sont formées dans la couche de grille inférieure (232) de la grille estampée (23) et **en ce que** certaines des bornes guillotines (351-356) sont reliées d'un seul tenant avec les languettes de raccordement (34) associées à la couche de grille inférieure (232) et les autres bornes guillotines (36) avec la bande d'estampage (28) circonférentielle.
